# EUROPÄISCHE PATENTSCHRIFT

(11) **EP 0 617 421 B1**
(45) Veröffentlichungstag und Bekanntmachung des Hinweises auf die Patenterteilung: **03.06.1998**
(21) Anmeldenummer: 94200666.9
(22) Anmeldetag: 16.03.1994
(51) Int. Cl.: G11B 15/64, G11B 5/53, G11B 15/61

(54) **Scanner für ein Magnetbandgerät**
Drum for a magnetic tape apparatus
Tambour pour un appareil à bande magnétique

(30) Priorität: 25.03.1993 DE 4309672
(43) Veröffentlichungstag der Anmeldung: 28.09.1994
(73) Patentinhaber: Philips Patentverwaltung GmbH, 22335 Hamburg (DE); Philips Electronics N.V., 5621 BA Eindhoven (NL)
(72) Erfinder: Fell, Wolfgang, Dr., D-20097 Hamburg (DE)
(74) Vertreter: Schmalz, Günther, Dipl.-Ing.

(56) Entgegenhaltungen:
- EP-A- 0 154 120
- EP-A- 0 155 563
- PATENT ABSTRACTS OF JAPAN vol. 12, no. 51 (P-667) 16. Februar 1988 & JP-A-62 197 949 (CANON ELECTRONICS INC) 1. September 1987
- PATENT ABSTRACTS OF JAPAN vol. 17, no. 112 (P-1498) 8. März 1993 & JP-A-04 301 257 (CANON INC) 23. Oktober 1992
- BTS DRUCKSCHRIFT "DCR 100 DIGITALE 4:2:2 MAZ

## Beschreibung

Die Erfindung bezieht sich auf einen Scanner für ein Magnetbandgerät mit einer durch einen Kopfspalt getrennten Ober- und Untertrommel, mit einem drehbar im Kopfspalt gelagerten, Magnetköpfe tragenden Kopfrad und mit einem schräg über den Kopfspalt von einem Lineal an der Untertrommel geführten Magnetband.

Ein Scanner der eingangs genannten Art ist z.B. durch die BTS-Druckschrift "DCR 100 Digitale 4:2:2 MAZ" bekannt geworden. Bei der bekannten Bauart enthält das Kopfrad eine Vielzahl von radial ausgerichteten Kopfträgern, die an ihrem radial außen liegenden Ende mit Magnetköpfen versehen sind. Bei Drehung des Kopfrades berühren die Magnetköpfe das um den Scanner herum geschlungene und umlaufende Band, so daß von dem jeweils abtastenden Magnetkkopf ein sogenanntes Zelt gebildet wird, das an seiner höchsten Stelle von dem Magnetkopf berührt wird und mit seinen seitlichen Bereichen auf den seitlichen Auflageflächen der Unter- und Obertrommel aufliegt. Wenn bei einer derartigen Bauart mit einer Vielzahl von Magnetköpfen die Geschwindigkeit eine bestimmte Größe überschreitet, so wird durch das umlaufende Kopfrad Luft gefördert, die zu einem ungleichmäßigen Luftpolster unterhalb des Bandes auf der Scanneroberfläche führt. Die Größe und Ausbildung dieses Luftpolsters ist abhängig von der Lage der Bandkanten zum Trommelspalt. Dieses ungleichmäßige Luftpolster bewirkt, daß das von dem jeweiligen abtastenden Kopf gebildete Zelt ständig seine Form ändert. Das Band läuft nicht mehr auf dem idealen Zylinder, der aus der Ober- und Untertrommel gebildet wird, sondern auf einem Zylinder, der aus der geometrischen, gefertigen Form und dem örtlichen Luftpolster besteht. Infolge der Abweichung des deformierten wirksamen Zylinders von dem idealen Zylinder versucht das Band, ebenfalls auszuweichen und aus der Spur zu laufen. Dies wird jedoch durch die Führungsanordnung für das Band verhindert, durch welche das Band unter Deformation wieder auf seine Führungskante gezwungen wird. Die Abwicklung des Bandes auf einem derartigen deformierten Zylinder ist somit nur möglich, wenn auch das Band deformiert wird. Infolge dieser Deformation entsteht eine ungleichmäßige Spannungsverteilung im Band, die sich negativ auf die Aufzeichnungs- bzw. Abtastqualität auswirkt. Eine ungleichmäßige Verteilung der Bandspannung vor dem Scanner erzeugt einen ungleichmäßigen Lesepegel und bedeutet somit eine Störung des Abtastvorganges längs der Spur.

Durch die US-PS 31 39 489 ist ein Scanner für ein Magnetbandgerät mit einer durch einen Kopfspalt getrennten Ober- und Untertrommel und mit einem drehbar im Kopfspalt gelagerten, Magnetköpfe tragenden Kopfrad bekannt geworden, bei dem zur Verminderung der Reibung des Bandes am Scanner von außen durch Kanäle Druckluft unter das Band gebracht wird. Dazu sind Luftzuführkanäle und zwei beiderseits des Kopfspaltes an den beiden Trommeln über Schrauben befestigte Flansche vorgesehen, die die Trommeloberfläche um einen bestimmten Betrag überragen und die einerseits eine Dichtung für die Kanäle und andererseits eine Dichtung zwischen dem Band und den Flanschen bilden. Dabei soll Druckluft in den Bereich zwischen dem Zylinder und dem Band eindringen, nicht jedoch in den Trommelspalt; dort würde Druckluft den Band-/Kopfkontakt reduzieren bzw. aufheben. Die Druckluft dient zur Erzeugung eines Luftfilmes zwischen dem Band und der Oberfläche der beiden Zylinder. Durch die beiden die Zylinderoberfläche überragenden Flansche wird das Band im Abtastungsbereich über eine verhältnismäßig große Distanz von 13 mm gespannt. Diese Bauweise bewirkt ein Durchhängen und eine schlechte seitliche Auflage des Bandes. Die Kombination zwischen dem extern zugeführten Luftfilm und der schmalen Oberfläche der beiden Flansche soll einen im wesentlichen reibungslosen Kontakt zwischen dem Band und dem Zylinder liefern. Bei der bekannten Bauart überragen die Flansche die Zylinderoberfläche um einen Betrag, der etwa in der Größe von 0,1 mm liegt.

Durch die EP 0 155 563 Al ist ein Scanner für ein Magnetbandgerät mit einer durch einen Kopfspalt getrennten Ober- und Untertrommel, mit einem drehbar im Kopfspalt gelagerten, Magnetköpfe tragenden Kopfrad und mit einem schräg über den Kopfspalt geführten Magnetband bekannt, das sowohl an seiner oberen Kante als auch an seiner unteren Kante über V-förmige Rillen in der Obertrommel und in der Untertrommel geführt wird. Dieser Scanner besitzt einen relativ großen Spalt zwischen der Ober- und Untertrommel, in dem ein relativ breites Kopfrad drehbar gelagert ist. Dabei liegt das Magnetband mit seiner einen Seite auf der Obertrommel und dem Kopfrad und mit seiner anderen Seite auf der Untertrommel auf, deren Durchmesser gegenüber der Obertrommel reduziert ist.

Der Erfindung liegt die Aufgabe zugrunde, bei einem Scanner der eingangs genannten Art den Einfluß von Luftfilmen, die bei hohen Geschwindigkeiten des Kopfrades unter dem Band von selbst entstehen und die durch ihre Dicke eine Abweichung von der idealen Zylinderform der Scannertrommel erzeugen, zu reduzieren.

Diese Aufgabe wird gemäß der Erfindung dadurch gelöst,
- daß die Bandlaufflächen beiderseits des Kopfspaltes Vertiefungen aufweisen, die der Dicke der bei Drehung des Kopfrades unter dem Band gebildeten Luftfilme angepaßt sind,
- daß die durch die Vertiefungen entstandenen reduzierten Bandlaufflächen an gleichmäßigen, radialen Erhebungen (Wülsten) mit konstantem Radius an den Trommelrändern beiderseits des Kopfspaltes ausgebildet sind und daß deren radiale Höhe in bezug auf die Vertiefungen der Dicke des gebildeten Luftfilmes angepaßt sind und
- daß die radialen Erhebungen mit in Richtung auf den Kopfspalt weisenden Lippen versehen sind.

Damit können die infolge der Drehung des Kopfrades entstehenden Luftfilme in die Vertiefungen ausweichen, so daß auf dem Band keine Aufwölbungen mehr entstehen können. Das Band liegt also wieder auf der idealen geometrischen Form eines Zylinders auf. Da keine Aufwölbungen mehr entstehen, entstehen auch keine Spannungen im Band und somit auch keine ungleichmäßigen Aufzeichnungs- bzw. Lesebedingungen. Eine derartige Trommelform erlaubt dem Band somit über einen Luftfilm-Dickenausgleich eine Egalisierung der Bandspannung quer zur Laufrichtung.

Die Breite der radialen Erhebungen in axialer Richtung muß an den Kopfüberstand angepaßt sein. Das von den Magnetköpfen bei Drehung des Kopfrades erzeugte "Zelt" sollte mit seinen Rändern innerhalb des Wulstbereiches liegen. Derartige radiale Erhebungen (Wülste) an den Trommelrändern im Bereich des Kopfspaltes sind relativ einfach herzustellen, wobei die radialen Erhebungen z.B. mit einer Stufe in die benachbarte Trommeloberfläche übergehen. Eine weitere Bearbeitung ist bei dieser Ausführung nicht erforderlich. Durch die in Richtung auf den Kopfspalt weisenden Lippen kann der Kopfspalt schmaler gemacht werden.

In weiterer Ausgestaltung der Erfindung ist vorgesehen, daß die von dem Band überstrichenen dreieckförmigen Trommelfächen beiderseits des Kopfspaltes mit dreieckförmigen, der Dicke des gebildeten Luftspaltes angepaßten Vertiefungen versehen sind, deren Ränder im Bereich des Kopfspaltes und der Bandkanten als Auflagefläche für das Band dienen. Bei dieser Ausführung wird die Trommeloberfläche in den genannten dreieckförmigen Bereichen mit einer der Luftfilmdicke entsprechenden muldenförmigen Vertiefung versehen. Dabei liegt das Band sowohl im Bereich des Kopfspaltes als auch im Bereich seiner Kanten auf den Rändern dieser Mulde auf, wobei die Mulde selbst zum Luftfilm-Dickenausgleich dient.

In weiterer Ausgestaltung der Erfindung ist vorgesehen, daß die Höhe der radialen Erhebungen gegenüber der benachbarten abgestuften Trommelfläche bzw. die Höhe der Ränder der dreieckförmigen Vertiefungen etwa 10 bis 20 µm beträgt. Damit können die bei erhöhten Geschwindigkeiten des Kopfrades entstehenden Luftfilme unter dem Band ausgeglichen werden, so daß das Band nicht aufwölbt und somit keine Bandspannungen entstehen.

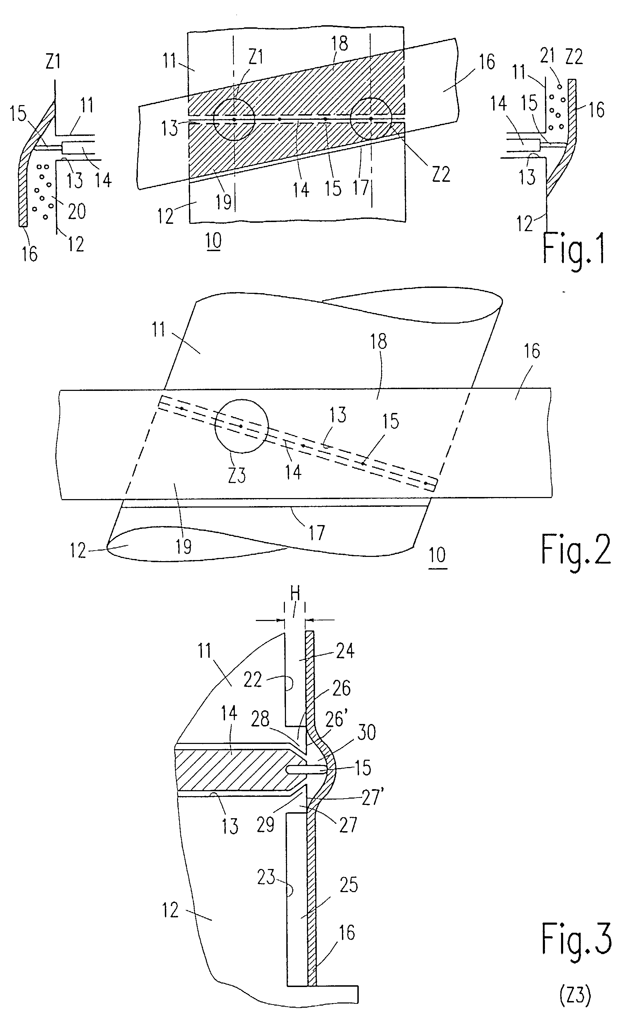

In der Zeichnung ist in Fig. 1 ein Ausführungsbeispiel des Standes Technik schematisch dargestellt.

Fig. 2 und 3 zeigen ein Ausführungsbeispiel gemäß der Erfindung, und zwar
Fig. 2 eine schematische Teil-Seitenansicht eines Scanners mit einer abgewickelten Scanneroberfläche und
Fig. 3 eine Einzelheit Z3 gemäß Fig. 2.

Fig. 1 zeigt eine abgewickelte Oberfläche eines Scanners 10 mit einer Obertrommel 11, einer Untertrommel 12 und einem in einem Kopfspalt 13 drehbar gelagerten Kopfrad 14, das an seinem Umfang mit Magnetköpfen 15 versehen ist. Mit 16 ist ein schräg über den Kopfspalt 13 geführtes Magnetband bezeichnet, das von einem Lineal 17 und nicht dargestellten Führungsrollen geführt wird. Links und rechts von Fig. 1 sind Einzelheiten Z1 und Z2 vergrößert dargestellt. Im Betrieb entstehen durch das sich schnell drehende Kopfrad 14 unterhalb des Bandes 16, und zwar in etwa dreieckförmigen Bereichen 18, 19 auf der Scanneroberfläche, Luftpolster 20, 21. Wie aus den Einzelheiten Z1 und Z2 zu ersehen ist, sind diese Luftpolster ungleichmäßig ausgebildet, ihre Gestalt ist abhängig von der Lage der Bandkanten zum Kopfspalt 13. Das Band 16 läuft somit auf einem deformierten Zylinder, der aus der geometrischen, gefertigten Form und dem örtlichen Luftpolster 20, 21 besteht. Der so gebildete wirksame Zylinder ist nicht mehr der ideale, bewußt konstruierte Zylinder, auf den sich die Helix bezieht. Die Abwicklung des Bandes 16 auf diesem deformieerten Zylinder ist nur möglich, wenn das Band 16 ebenfalls deformiert wird. Das bedeutet aber eine Störung des Abtastvorganges längs der Spur. Wie aus den Darstellungen Z1 und Z2 zu ersehen ist, ändert das von den abtastenden Köpfen 15 gebildete Zelt ständig seine Form. Aus diesen Überlegungen ergibt sich der der Erfindung zugrundeliegende Gedanke, Maßnahmen vorzusehen, die die Bildung derartiger ungleichmäßiger Luftpolster verhindern.

Fig. 2 und 3 zeigen eine Bauart gemäß der Erfindung, bei der die genannten Maßnahmen durchgeführt wurden. Fig. 2 zeigt wieder einen Scanner 10 mit einer Obertrommel 11 und einer Untertrommel 12, die durch einen Kopfspalt 13 getrennt sind, in dem ein Kopfrad 14 mit radial angeordneten Magnetköpfen 15 drehbar angeordnet ist. Das Magnetband 16 wird über ein Führungslineal 17 schräg über den Kopfspalt 13 hinweg geführt.

Fig. 3 zeigt eine Einzelheit Z3 gemäß Fig. 2. Danach ist die Bandlauffläche in den Bereichen 18, 19, bei denen gemäß Fig. 1 Luftfilme entstanden, mit Vertiefungen 22, 23 versehen. In diesen Vertiefungen sammelt sich die durch Drehung des Kopfrades 14 geförderte Luft und bildet gleichmäßige Luftfilme 24, 25. Die Vertiefungen 22, 23 sind der Dicke der Luftfilme 24, 25 angepaßt, so daß das Band 16 keine Aufwölbungen mehr aufweist. Die durch die Vertiefungen 22, 23 entstandenen reduzierten Bandlaufflächen 26', 27' sind an radialen Erhebungen 26, 27 ausgebildet. Diese sind jeweils mit in den Kopfspalt 13 ragenden Lippen 28, 29 versehen, die den Kopfspalt 13 schmaler machen sollen. Die Lippen ermöglichen eine einwandfreie Auflage des Bandes und verhindern in zuverlässiger Weise ein Durchhängen. Wie aus Fig. 3 zu ersehen ist, bildet sich, im Gegensatz zu Fig. 1, beim Durchlauf eines Magnetkopfes 15 ein gleichmäßiges Zelt 30 oberhalb des Kopfspaltes 13. Die schädlichen Wirkungen der Luftfilme sind damit eliminiert. Die Wülste 26, 27 haben z.B. etwa eine Breite von 1 mm und eine Höhe H von 10 bis 20 µm. Ferner besitzen sie gegenüber der Bahn des Kopfrades 14 einen konstanten Radius in der Ober- und Untertrommel 11, 12. Erfolgt nunmehr eine über die Bandbreite unterschiedliche Spannungsverteilung, so wird der Luftfilm in den Vertiefungen 22, 23 unterschiedlich zusammengedrückt. Dadurch ergibt sich ein Spannungsausgleich und ein gleichmäßiger Kopfandruck an das Band.

## Patentansprüche

1. Scanner (10) für ein Magnetbandgerät mit einer durch einen Kopfspalt (13) getrennten Ober- und Untertrommel (11, 12), mit einem drehbar im Kopfspalt (13) gelagerten, Magnetköpfe (15) tragenden Kopfrad (14) und mit einem schräg über den Kopfspalt (13) von einem Lineal (17) an der Untertrommel (12) geführten Magnetband (16), dadurch gekennzeichnet,
- daß die Bandlaufflächen beiderseits des Kopfspaltes (13) Vertiefungen (22, 23)aufweisen, die der Dicke der bei Drehung des Kopfrades (14) unter dem Band (16) gebildeten Luftfilme (24, 25) angepaßt sind,
- daß die durch die Vertiefungen (22, 23) entstandenen reduzierten Bandlaufflächen (26', 27') an gleichmäßigen, radialen Erhebungen (26, 27) mit konstantem Radius an den Trommelrändern beiderseits des Kopfspaltes (13) ausgebildet sind und daß deren radiale Höhe (H) in bezug auf die Vertiefungen (22, 23) der Dicke des gebildeten Luftfilmes (24, 25) angepaßt ist, und
- daß die radialen Erhebungen (26, 27) mit in Richtung auf den Kopfspalt (13) weisenden Lippen (28, 29) versehen sind.

2. Scanner nach Anspruch 1, dadurch gekennzeichnet, daß die von dem Band (16) überstrichenen dreieckförmigen Trommelflächen (18, 19) beiderseits des Kopfspaltes (13) mit dreieckförmigen, der Dicke der gebildeten Luftfilme angepaßten muldenförmigen Vertiefungen versehen sind, deren Ränder im Bereich des Kopfspaltes (13) und der Bandkanten als Auflageflächen für das Band (16) dienen.

3. Scanner nach Ansprüche 1 oder 2, dadurch gekennzeichnet, daß die Höhe (H) der radialen Erhebungen (26, 27) bzw. die Höhe der Ränder der muldenförmigen Vertiefungen (22, 23) gegenüber dem Boden der Vertiefungen etwa 10 bis 20 µm beträgt.

## Claims

1. A scanner (10) for a magnetic-tape apparatus, comprising an upper and a lower drum (11, 12) separated by a drum gap (13), and a head disc (14) carrying magnetic heads (15) and supported to be rotatable in the drum gap (13), a magnetic tape (16) being guided obliquely across the drum gap (13) by means of a ruler (17) on the 5 lower drum (12), characterized in that
- the tape contact surfaces at both sides of the drum gap (13) have recesses (22, 23) adapted to the thickness of the air films (24, 25) formed underneath the tape (16) during rotation of the head disc (14),
- the smaller tape contact surfaces (26', 27') obtained as a result of the recesses (22, 23) are formed in uniform radial raised portions (26, 27) having a constant radius at the drum edges at both sides of the drum gap (13), and the radial height (H) of said raised portions relative to the recesses (22, 23) is adapted to the thickness of the air film (24, 25) formed, and
- the radial raised portions (26, 27) have lips (28, 29) pointing towards the drum 15 gap (13).

2. A scanner as claimed in Claim 1, characterized in that the triangular drum areas (18, 19) over which the tape (16) moves and situated at both sides of the drum gap (13) are provided with triangular trough-shaped recesses adapted to the thickness of the air films formed, the edges of said recesses at the location of the drum gap (13) and 20 of the tape edges serving as supporting surfaces for the tape (16).

3. A scanner as claimed in Claim 1 or 2, characterized in that the height (H) of the radial raised portions (26, 27), or the height of the edges of the trough-shaped recesses (22, 23) relative to the bottoms of the recesses, is approximately 10 to 20 µm.

## Revendications

1. Tambour (10) pour un appareil à bande magnétique avec des tambours supérieur et inférieur (11, 12) séparés par un entrefer de tête (13), avec une tête (14) logée à rotation dans l'entrefer de tête (13) et portant des têtes magnétiques (15) et avec une bande magnétique (16) guidée obliquement sur l'entrefer de tête (13) par une réglette de guidage (17) sur le tambour inférieur (12), caractérisé en ce
- que les surfaces de roulement de la bande présentent de part et d'autre de l'entrefer de tête (13) des évidements (22, 23) qui sont adaptés à l'épaisseur des pellicules d'air (24, 25) formées lors de la rotation de la tête (14) sous la bande (16),
- que les surfaces de roulement de la bande (26', 27') réduites formées par les évidements (22, 23) sont conçues sur des surélèvements radiaux uniformes (26, 27) d'un rayon constant sur les bords du tambour de part et d'autre de l'entrefer de tête (13) et que leur hauteur radiale (H) par rapport aux évidements (22, 23) est adaptée à l'épaisseur de la pellicule d'air formée (24, 25), et
- que les surélèvements radiaux (26, 27) sont dotés de languettes (28, 29) tournées dans la direction de l'entrefer de tête (13).

2. Tambour selon la revendication 1, caractérisé en ce que les surfaces de tambour (18, 19) triangulaires balayées par la bande (16) sont dotées de part et d'autre de l'entrefer de tête (13) d'évidements triangulaires en forme d'auge adaptés à l'épaisseur des pellicules d'air formées, dont les bords servent de surfaces d'application pour la bande (16) dans la région de l'entrefer de tête (13) et des bords de la bande.

3. Tambour selon l'une des revendications 1 ou 2 caractérisé en ce que la hauteur (H) des surélèvements radiaux (26, 27) ou la hauteur des bords des évidements (22, 23) en forme d'auge s'élève à environ 10 à 20 µm par rapport au fond des évidements.
